# EUROPEAN PATENT APPLICATION

(11) **EP 1 277 385 A1**
(43) Date of publication of application: **22.01.2003**
(21) Application number: 02014407.7
(22) Date of filing: 28.06.2002
(51) Int. Cl.: A01D 34/68

(54) **A lawn mover vehicle fitted with a blade block safety device**

(30) Priority: 20.07.2001 IT MI20010412 U
(71) Applicant: Ibea S.p.A., 22070 Luisago (CO) (IT)
(72) Inventor: Faverio, Danilo, 22070 Casnate con Bernate (CO) (IT); Zanirato, Renzo, 22073 Fino Mornasco (CO) (IT); Colombo, Stefano, 21046 Malnate (VR) (IT)
(74) Representative: Savi, Alberto

(57) **Abstract**

This invention relates to a lawn mower, fitted with a coupling for connection of the rotating blade with the engine, characterised by the fact that it includes a safety device, which controls said coupling through activation of a lever (2), in which the movement is permitted only by a special position of the lever (1), including means aimed at blocking said lever (2), when said lever (1) is not found in said particular position, and means aimed at releasing said lever (2) when the lever (1) occupies said particular position.

## Description

The invention refers to a safety device aimed at blocking the rotating blade of a lawn mower, in the case of accidental release of the controls, and to allow for restart only if a precise accident prevention procedure is respected.

The cutting area of this type of machine normally gets obstructed with accumulations of grass, especially when wet. In these situations direct intervention is necessary to remove said accumulations. This operation is rather hazardous if carried out with the blade in movement, therefore, in order to avoid accidents due to careless behaviour by the operator, the blade must not be in movement when the operator intervenes on the blade or immediately close by. As the machine controls are placed on the handgrip which is rather far away from the blade, it is practically impossible to touch the blade and the controls at the same time. Consequently, the known technique includes devices that block the blade when the controls are released.

The safety devices according to the known technique include a motor stop. In the case of an electrical motor, this is not a problem as it is sufficient to act once again on the starting lever so that it restarts. The situation is not so easy in the case of an internal combustion engine as in order to restart the motor longer and more complicated operations are necessary.

A safety device that blocks the blade without switching off the motor increases the convenience of use of the lawn mower; this is achieved through a well known device, which includes a brake and a slip clutch.

When said device is in the "gear" position it releases the blade and engages the engine, so that the lawn mower can operate, while, when it is in a "neutral" position the blade is blocked and the engine is declutched.

In this case, however, the lawn mower itself must be fitted with a device that allows for the blade to restart only in conditions of complete safety.

The present invention proposes the control of said brake-clutch device so that, when controls are released, it selects the "neutral" position by blocking the blade, even with the engine on, and forces a safety procedure for selection of the "gear" position, to start up the blade.

The device according to the invention includes two levers, the first of which aims at keeping the second blocked in two positions, respectively corresponding to the two states of "neutral" and "gear", or to release it to allow for rotation with the objective of moving from one position to another. When the operator intends to act on the second lever to engage or disengage the blade, he must at the same time act on the first lever to achieve the release of the second. In this way he must use both hands at the same time and therefore it will be impossible to have access to the blade during operation.

Furthermore, as both of the operations are subject to elastic means of recall, the release of controls by the operator will lead to a movement of both said levers with the consequent selection of the "neutral" position of the brake-clutch device, blocking the blade without switching off the engine.

The device according to the invention will now be described with reference to the attached drawings, in which:
- figure 1 (a, b) illustrates the device according to the invention in the "neutral" position (figure 1a) and "gear" position (figure 1b),
- figure 2 illustrates the device in the "neutral" position,
- figure 3 illustrates the device in an intermediate temporary position,
- figure 4 illustrates the device in a "gear" position.

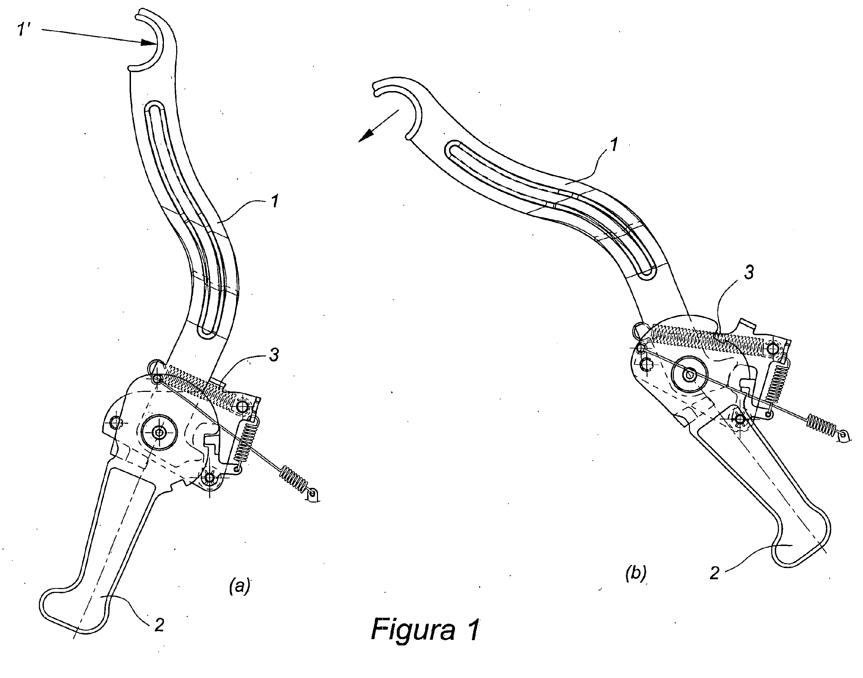

In figure 1a the device according to the invention is illustrated in a first position, which corresponds to the "neutral" position of the above-mentioned brake-clutch device in which the blade is released by the engine and is subject to a brake action.

In this position the engine may be turned on or, if it is already on, it will not provoke rotation of the blade.

Once the engine has been started, it is necessary to select the "gear" position. In order to carry out this manoeuvre, the operator must follow a procedure described herein below and will put the levers in the configuration illustrated in figure 1b.

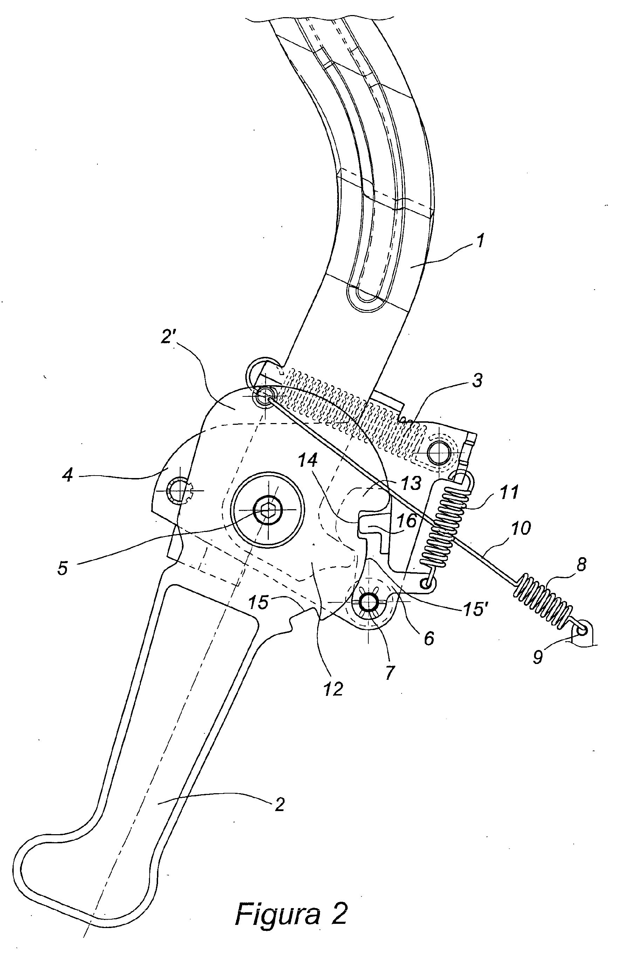

The mechanism is illustrated in figure 2, in a "neutral" position, enlarged for greater clarity.

This includes:
- a plate (4), connected to the machine, normally positioned on the handle, in correspondence with the handgrip,
- a lever (1), that rotates around a fulcrum (5) made up of a pin which is connected to the plate (4),
- a lever (2), which rotates around the same fulcrum (5),
- a smaller lever (6), which rotates around a fulcrum (7), made up of a pin fitted to the plate (4)

The lever (1) is fitted with a handgrip (1'), made in such a way that the operator can keep it near to the handgrip of the machine with just one hand, winning the elastic reaction of a helical spring (3), connected with a first end to the plate (4) and with a second end to said lever (1). Said position, in which the handgrip (1') of the lever is alongside the handgrip of the machine, corresponds with the working position while the position in which the spring (3) recalls the lever (1), corresponds with the rest position.

Furthermore, the lever (1) is characterised by the fact that it includes a cam (12) that commits a protruding part (13) of the smaller lever (6) and which, in a particular configuration of the mechanism, strikes against a protruding part (17) of said lever (2).

The lever (2) is connected with means that are well known to the brake-clutch device that blocks the blade without switching off the engine. Said lever (2) is subject to the action of a helical spring (8) that recalls it back into its "neutral" position, to which the blocked blade and the engine that is switched off is connected, said spring (8) being connected to a first end at a point (9) combined with the machine frame and with a second end to said lever (2), through a cable (10).

The lever (2) is characterised by the fact that it is combined with a plate (2') that has two notches, or housings (14) and (15), separated by a slide (15') characterised by the fact that it presents distances of the fulcrum (5) progressively increasing between the housing (14) and the housing (15).

The smaller lever (6) is characterised by the fact that said protruding part (13) rests against the cam (12) of the lever (1) and has a small tooth (16) that subsequently commits the housings (14) and (15) to be found on the plate (2') combined with the lever (2).

The small lever (6) is subject to the action of a helical spring (11) that pushes it towards the plate (2') combined with the lever (2) in such a way as to insert said tooth (16) into the housings (14) and (15). Said spring (11) is connected by means of a first end to the plate (4) and a second end to said lever (6).

Operation of the device according to the invention is the following:

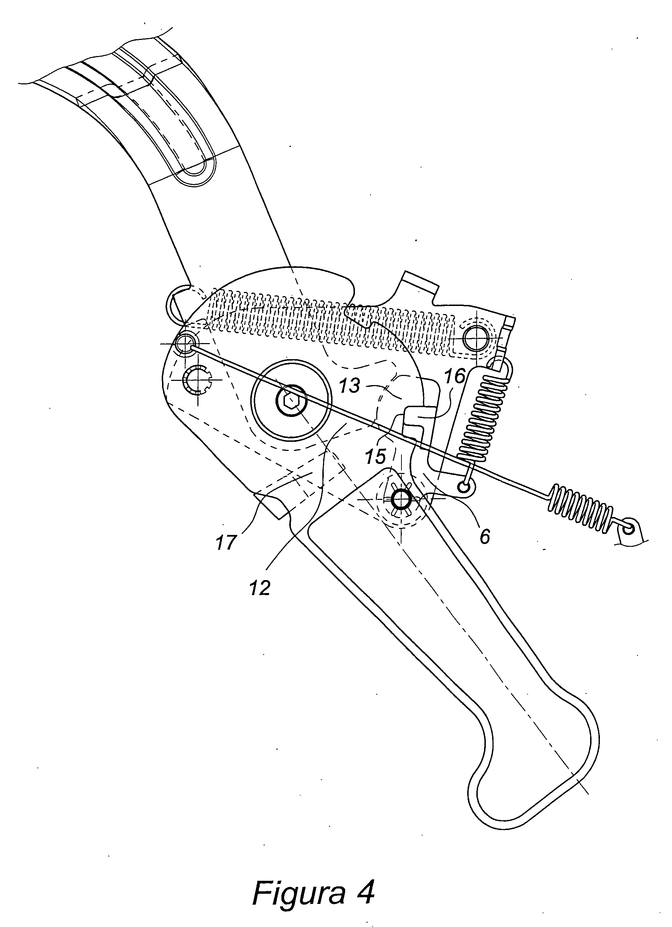

When the engine is started, the lever (2) is in the position indicated in figures 1a and 2, in which the blade is stopped and disconnected from the engine. In order to connect the blade to the engine bring the lever (2) into the "gear" position, represented in figures 1b and 4, but this is not possible directly as the small lever (6) prevents the rotation of the lever (2), as the tooth (16) of said small lever (6) is inserted in the housing (14) of the lever (2) and as said small lever (6) is fixed at the point (7) united with the plate (4).

In order to extract the tooth (16) from the housing (14) intervention must be made on the lever (1) bringing it to the position indicated in figures 1b and 4, making it rotate around the fulcrum (5).

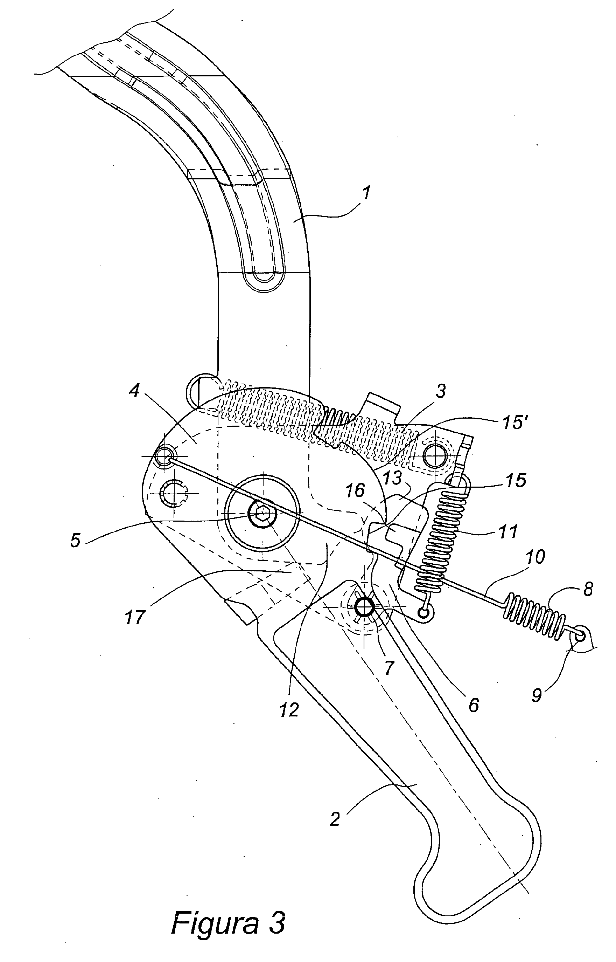

During the passage between the two end positions, the lever (1) is found in the position indicated in figure 3 in which the cam (12) of the lever (1) rotates the small lever (6), around the fulcrum (7), pushing against the protruding part (13) of said small lever (6). In this way the tooth (16) of said small lever (6) releases itself from the housing (14) of the lever (2) that is therefore free to rotate around the fulcrum (5).

The chute (15) is eccentric, with a distance from the fulcrum (5) increasing between the housing (14) and the housing (15), so that the edge of the housing (14) is kept as low as possible on the side of the chute (15') and therefore to favour release of the lever (2). By continuing with action on the lever (1), the cam (12) does not push any more against the protruding part (13) of the small lever (6) (figure 4), but if upon the lever release (2) the operator has intervened on it and made it rotate in an anti-clockwise direction, the tooth (16) of the lever (6) goes to rest against the chute (15') and, therefore, the lever (2) is kept released. By continuing with action on the lever (2), the housing (15) comes into correspondence with the tooth (16) which, due to the effect of the spring action (11), will commit said housing (15).

At this point the lever (2) has reached the "gear" position and the engine can rotate the blade.

In the position indicated in figure 3, the protruding part (17) of the lever (2) goes to rest against the cam (12), following rotation of said lever (2) to take it into a "gear" position. Contact of the protruding part (17) against the cam (12) has the objective of preventing that, after the cam (12) has withdrawn the small lever (6), releasing the lever (2), the lever (1) can return to its initial position.

The action of the lever has provoked loading of the springs (3) and (6). In the case of release, voluntary or accidental, of the lever (1), the spring (3) will recall the lever (1) into the resting position. During the passage towards the intermediate position, the cam (12) of the lever (1) pushes once again against the protruding part (13) of the small lever (6), which then rotates, winning the reaction of the spring (11). The tooth (16) releases from the housing (15), releases the lever (2). Said lever (2), subject to the spring action (8), through the cable (10) is called into the "neutral" position, where it will be blocked to commit the tooth (16) in the housing (14), following the spring action (11) on the small lever (6).

It is obvious that, if there was no protrusion (17) on the lever (2) which prevents the return of the lever (1) into the initial position, after having released the lever (2), it would eliminate the possibility of achieving an automatic arrest of the blade in the case of voluntary or accidental release of the controls.

The advantage of the device according to the invention consists essentially in the fact that it allows for coupling of the blade only with the use of both hands. This condition is vital to use a device in complete safety which, in the case of emergency, blocks the blade, releasing it from the engine, without blocking the engine itself.

## Claims

1. A lawn mower, fitted with a coupling for connection of the rotating blade with the engine, **characterised by** the fact that it includes a safety device, which controls said coupling through activation of a lever (2), in which the movement is permitted only by a special position of the lever (1), including means aimed at blocking said lever (2), when said lever (1) is not found in said particular position, and means aimed at releasing said lever (2) when the lever (1) occupies said particular position.

2. The lawn mower according to claim 1, **characterised by** the fact that said means aimed at blocking said lever (2) include:
• two housings (14) and (15) located on a plate combined with the lever (2),
• a tooth (16) located on a lever (6)
being said lever subject to the action of elastic means that push it against the plate in such a way that said tooth commits said housings, when they are present in correspondence with said tooth, and being the lever (6) committed to a combined point with the fulcrum of the lever (2).

3. The lawn mower according to claim 1, **characterised by** the fact that said means are aimed at releasing said lever (2) and include:
• a cam (12) of the lever (1)
• a protruding part (13) of said lever (6)
being said cam (12) aimed at exercising pressure on said protruding part (13), in such a way as to provoke rotation of the lever (6) and, consequently, release of the tooth (16) of one of the housings (14) or (15).

4. The lawn mower according to claim 1 and 3, **characterised by** the fact that said particular position of the lever (1) that releases the lever (2) is an intermediate position between the end positions that said lever (1) can occupy, for which the cam (12), united with the lever (1), pushing against the protruding part (13) of the lever (6), stops it and extracts the tooth (16) of said lever (6) from a housing (14) and (15) of the plate combined with the lever (2).

5. The lawn mower according to claims 1, 3 and 4 **characterised by** the fact that there is a protrusion (17) on said lever (2) which by applying a contrasting action with regards to the lever (1), resting against a side of the cam (12), which is combined with said lever (1), aims at avoiding that the lever (1), after having reached the particular position that releases the lever (2), can return to its starting position.

6. The lawn mower according to claims 1 and 2 **characterised by** the fact that said lever (6) is subject to the action of elastic means that push against a part of the part joined with the lever (2) so that when a housing (14) or (15) of the lever (2) is opposite the tooth (16) of said lever (6), said tooth (16) commits said housing (14) or (15) by blocking said lever (2).

7. The lawn mower according to claims 1, 3 and 4 **characterised by** the fact that the lever (1) is subject to the action of elastic means so that the release of said lever (1) by the operator provokes rotation around its fulcrum (5) bringing it into a particular position and therefore the lever (2) is released.

8. The lawn mower according to the previous claims **characterised by** the fact that the lever (2) is subject to the action of elastic means that bring it back into the "neutral" position when said lever (2) is released.
